# EUROPEAN PATENT APPLICATION

(11) **EP 3 945 228 A1**
(43) Date of publication of application: **02.02.2022**
(21) Application number: 20193766.1
(22) Date of filing: 01.09.2020
(51) Int. Cl.: F16K 11/00, F16K 35/04, F16K 11/076, F16K 11/085, E03C 1/04, F16K 5/18

(54) **WATER DIVERTER**

(30) Priority: 30.07.2020 CN 202021552953 U
(71) Applicant: Fujian Xihe Sanitary Ware Technology Co., Ltd., QuanZhou, Fujian 362304 (CN)
(72) Inventor: LIN, Xiaofa, QuanZhou, Fujian (CN); LIN, Xiaoshan, QuanZhou, Fujian (CN); JI, Hejun, QuanZhou, Fujian (CN); DENG, Xiaoqing, QuanZhou, Fujian (CN)
(74) Representative: Arnold & Siedsma

(57) **Abstract**

The present application provides a water diverter including a housing (110) and a valve core (200). A valve body (120) is installed in the housing, and the valve body is provided with at least one water inlet channel and at least two water outlet channels. The at least two water outlet channels are evenly spaced in a circumferential direction on the valve body. The water inlet channel and the water outlet channels are arranged at intervals in an axial direction on the valve body. The valve core is rotatably installed in the valve body, and a space enclosed by the valve core and the valve body forms a water passing channel (300). The at least one water inlet channel and the at least two water outlet channels are communicated with the water passing channel. The valve core is provided with at least one sealing member (400). The valve core is rotated between at least two limited positions corresponding to the at least two water outlet channels. When the valve core is at one of the limited positions, at least one water outlet channel is communicated with the water passing channel, and simultaneously the at least one sealing member blocks the rest of the water outlet channels. By the water diverter, waterway switching is performed by rotating the valve core in any direction. The water diverter has better practicability.

## Description

### Technical Field

The present disclosure relates to the field of kitchen and sanitation technologies, in particular to a water diverter.

### Background

In an existing water diverter, a valve core is installed in a valve body. When the valve core is rotated forwardly to an extreme position, a water inlet is communicated with a first water outlet and is disconnected from a second water outlet. When the valve core is rotated reversely to an extreme position, the water inlet is disconnected from the first water outlet and is communicated with the second water outlet. For this kind of water diverter, waterway switching can be performed by rotating the valve core only in a preset direction, rather than in any direction, leading to poor practicability. In addition, the valve body is manufactured by a plastic material, and the manufactured water diverter does not conform to the KTW certification. If the valve body is manufactured by a material conforming to the KTW certification, the manufacturing cost of the valve body will be relatively high.

### Summary

An embodiment of the present disclosure provides a water diverter, in which waterway switching is performed by rotating a valve core in any direction and which has better practicability.

The water diverter according to an embodiment of the present disclosure includes a housing. The water diverter further includes: a valve body installed in the housing, the valve body being provided with at least one water inlet channel and at least two water outlet channels, the at least two water outlet channels being evenly spaced in a circumferential direction on the valve body, and the water inlet channel and the water outlet channels being arranged at intervals in an axial direction on the valve body; a valve core rotatably installed in the valve body, a space enclosed by the valve core and the valve body forming a water passing channel, the at least one water inlet channel and the at least two water outlet channels both being communicated with the water passing channel, and the valve core being provided with at least one sealing member; the valve core being rotatable between at least two limited positions corresponding to the at least two water outlet channels, and when the valve core is at one of the limited positions, at least one water outlet channel being communicated with the water passing channel, and simultaneously the at least one sealing member blocking the rest of the water outlet channels.

In an embodiment, the valve core is provided with at least one first positioning groove corresponding to the at least one sealing member, the sealing member is accommodated in the corresponding first positioning groove, a first elastic member is arranged between the sealing member and the first positioning groove, and the first elastic member pushes the sealing member in a direction away from the first positioning groove.

In an embodiment, the housing is provided with at least one water inlet connection port and at least two water outlet connection ports, and the valve body is provided with at least one water inlet and at least two water outlets; the at least one water inlet and the at least one water inlet connection port are hermetically connected in one-to-one correspondence to form the at least one water inlet channel; the at least two water outlet connection ports and the at least two water outlets are hermetically connected in one-to-one correspondence to form the at least two water outlet channels; and materials of the valve body, the at least one water inlet connection port and the at least two water outlet connection ports are environment-friendly materials.

In an embodiment, an inner surface of the valve body includes a cylindrical surface section, the at least two water outlets are located on the cylindrical surface section, and an end surface of the at least one sealing member facing the valve body is a cylindrical curved surface pressed against the cylindrical surface section.

In an embodiment, the water diverter further includes: an elastically telescopic positioning member, the valve core being provided with a second positioning groove, the positioning member being installed in the second positioning groove; the valve body being further provided with at least two mating grooves that are evenly spaced in the circumferential direction and correspond to the at least two water outlet channels one by one; and the positioning member being positionable in one of the at least two mating grooves.

In an embodiment, the positioning member includes: a positioning column disposed in the second positioning groove, an end surface of the positioning column facing the valve body being a spherical surface; and a second elastic member disposed in the second positioning groove and pressing the positioning column radially outward.

In an embodiment, the water diverter further includes: a packaging assembly blocked at one end of the housing and pressing the valve body into the housing.

In an embodiment, the packaging assembly includes a fixing seat and a base, the base is fixed in the fixing seat, the base is configured such that the fixing seat blocks at one end of the housing and presses the valve body into the housing, and the material of the fixing seat is an environment-friendly material.

In an embodiment, the water diverter further includes: a knob located outside the valve body and installed at one end of the valve core for driving the valve core to rotate.

In an embodiment, the valve body is provided with one water inlet channel and two water outlet channels, the valve core is provided with one sealing member, and when the valve core is at one of the limited positions, the water passing channel is communicated with one water outlet channel, and the sealing member blocks the other water outlet channel.

In an embodiment, the sealing member is a sealing cup.

In the water diverter according to an embodiment of the present disclosure, the valve core drives at least one sealing member to rotate, the at least one sealing member can seal and block a portion of the water outlet channels, the sealed and blocked portion of the water outlet channels are disconnected from the water inlet channel and water cannot be discharged therefrom, the water inlet channel is communicated with a water outlet channel that is not sealed and blocked by the sealing member to discharge water, and waterway switching can be performed by rotating the valve core forwardly or reversely, thereby realizing 360-degree rotation in any direction, so that the water diverter has better practicability.

Further, the housing may be manufactured by a low-cost material, and the valve body is manufactured by a material conforming to the KTW certification. In this way, the manufacturing cost of the water diverter can be reduced.

Other features and advantages of the present disclosure will be explained in the description which follows, and will be partly obvious from the description, or be understood through the implementation of the present disclosure. The object and other advantages of the present disclosure may be realized and obtained by the structure particularly indicated in the description and drawings.

### Brief Description of Drawings

The accompanying drawings are used to provide a further understanding of the technical solutions of the present disclosure and form a part of the specification. Together with embodiments of the present disclosure, they are used to explain the technical schemes of the present disclosure and do not constitute a limitation on the technical schemes of the present disclosure.
FIG. 1 is a schematic diagram of a three-dimensional structure of a water diverter according to an embodiment of the present disclosure.
FIG. 2 is a schematic exploded structural diagram of the water diverter shown in FIG. 1.
FIG. 3 is a schematic sectional structural diagram of the water diverter shown in FIG. 1 in a use state, in which a water inlet is communicated with a water outlet at the upper side.
FIG. 4 is a schematic sectional structural diagram of the water diverter shown in FIG. 1 in another use state, in which the water inlet is communicated with a water outlet at the lower side.

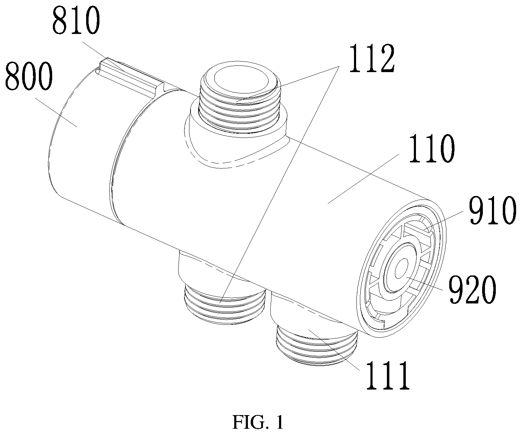

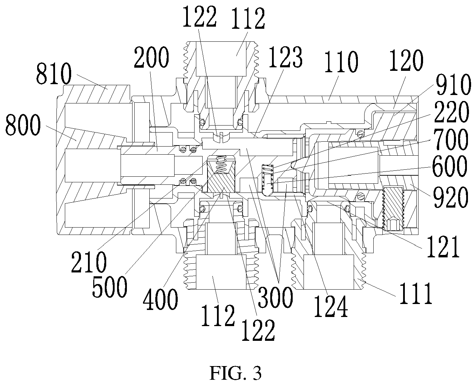

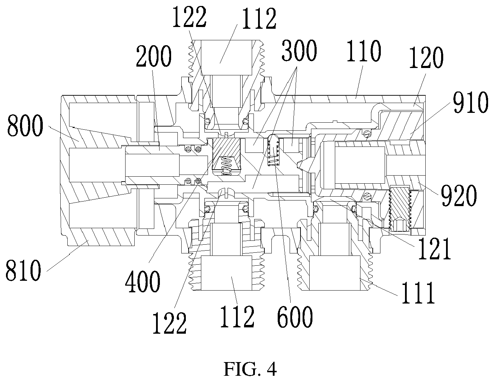

The correspondence between reference signs and component names in FIGS. 1 to 4 is as follows:
110- housing, 111- water inlet connection port, 112- water outlet connection port, 120-valve body, 121- water inlet, 122- water outlet, 123- cylindrical surface section, 124- mating groove, 200- valve core, 210- first positioning groove, 220- second positioning groove, 300-water passing channel, 400- sealing cup, 410- cylindrical curved surface, 500- first elastic member, 600- positioning column, 700- second elastic member, 800- knob, 810- indicator, 910-fixing seat, and 920- base.

### Detailed Description

In order to make the objects, technical schemes and advantages of the present disclosure clearer, the embodiments of the present disclosure will be described below in detail with reference to the drawings. It should be noted that the embodiments in this application and the features in the embodiments may be combined with each other arbitrarily if there is no conflict.

### Example 1

As shown in FIG. 1 to FIG. 4, a water diverter according to an embodiment of the present disclosure includes a housing 110, a valve body 120, a valve core assembly, a packaging assembly and a knob 800. The housing 110 and the valve body 120 are two separate components. The valve core assembly is accommodated in the valve body 120. One end of the valve core assembly extends out of the valve body 120 and is connected with the knob 800. The packaging assembly fixes the valve body 120 in the housing 110.

The housing 110 is substantially cylindrical, and is provided with one water inlet connection port 111 and two water outlet connection ports 112 at a side surface. The two water outlet connection ports 112 are evenly spaced in a circumferential direction on the side surface of the housing 110. The one water inlet connection port 111 is located at one side of one of the water outlet connection ports 112 close to the packaging assembly. The material of the housing 110 is plastic. The materials of the water inlet connection port 111 and the water outlet connection ports 112 are environment-friendly materials conforming to the KTW certification.

The valve body 120 is provided with one water inlet 121 and two water outlets 122. The two water outlets 122 are evenly spaced in a circumferential direction on the valve body 120. The one water inlet 121 and one of the water outlets 122 are arranged at intervals in an axial direction on the valve body 120. An inner surface of the valve body 120 includes a cylindrical surface section 123 on which the two water outlets 122 are located. The valve body 120 is also provided with two mating grooves 124. The two mating grooves 124 are evenly spaced in the circumferential direction on the inner surface of the valve body 120, and correspond to the positions of the two water outlets 122 one by one. The material of the valve body 120 is an environment-friendly material conforming to the KTW certification.

The valve core 200 is provided with a first positioning groove 210 and a second positioning groove 220. The first positioning groove 210 and the second positioning groove 220 are arranged at intervals in the axial direction on the surface of the valve core 200. A sealing cup 400 is received in the first positioning groove 210. An end surface of the sealing cup 400 extending out of the first positioning groove 210 is a cylindrical curved surface 410. A first elastic member 500 is disposed between the other end surface of the sealing cup 400 and the first positioning groove 210. The material of the sealing cup 400 is silicone rubber or the like conforming to the KTW certification. The first elastic member 500 is a coil spring. A positioning column 600 is received in the second positioning groove 220. An end surface of the positioning column 600 extending out of the second positioning groove 220 is a spherical surface. A second elastic member 700 is connected between the other end surface of the positioning column 600 and the second positioning groove 220.

The packaging assembly includes a fixing seat 910 and a base 920. The fixing seat 910 is an annular structure with one end closed and the other end opened, and the base 920 is installed in the fixing seat 910. The material of the fixing seat 910 is an environment-friendly material conforming to the KTW certification.

The knob 800 is provided with an indicator 810. The indicator 810 is a length of convex rib extending outward from the surface of the knob 800. The indicator 810 provides convenience for an operator's finger to contact the knob 800. The indicator 810 also provides an indication of the position of rotation of the knob 800.

The connection relationship and effect of the various components of the water diverter are as follows.

As shown in FIG. 1 to FIG. 4, the valve body 120 is installed in the housing 110. The valve core 200 is rotatably installed in the valve body 120. A water passing channel 300 is formed between the valve core 200 and the valve body 120. The water inlet 121 and the two water outlets 122 are communicated with the water passing channel 300. The water inlet 121 and the water inlet connection port 111 are plug-in connected and sealed to form a water inlet channel. The two water outlet connection ports 112 and the two water outlets 122 are plug-in connected and sealed in one-to-one correspondence to form two water outlet channels. The first positioning groove 210 corresponds to any one of the water outlets 122. Components such as the fixing seat 910 and the base 920 are connected to a trailing end of the valve body 120. The components such as the fixing seat 910 and the base 920 are used to fix the valve core 200 in the valve body 120. The fixing seat 910 is inserted into one end of the housing 110 and pushes against the valve core 200 and the valve body 120 inward. The base 920 is inserted into the fixing seat 910 to deform the fixing seat 910. An outer diameter of the fixing seat 910 increases due to deformation, so as to be in interference fit with the housing 110. A front end of the valve core 200 is in sealing fit with the valve body 120. The knob 800 is installed at the front end of the valve core 200, and the knob 800 is used for driving the valve core 200 to rotate.

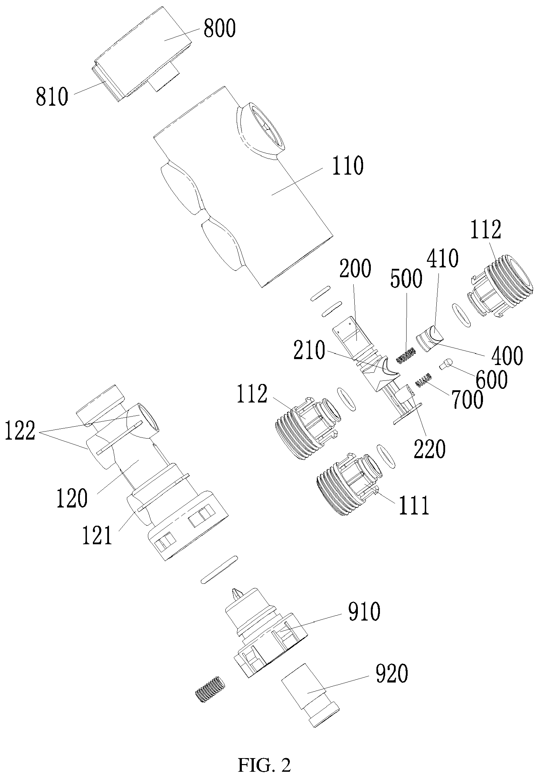

As shown in FIG. 2 to FIG. 4, the first elastic member 500 and the sealing cup 400 are arranged in the first positioning groove 210, and the first elastic member 500 presses the sealing cup 400 radially outward, so that the cylindrical curved surface 410 is abutted against the cylindrical surface section 123, and the sealing cup 400 has better sealing performance and can better seal any one of the water outlets 122. The first elastic member 500 pressing the sealing cup 400 radially outward may also prolong the service life of the sealing cup 400.

As shown in FIG. 2 to FIG. 4, the positioning column 600 and the second elastic member 700 are both installed in the second positioning groove 220, and the second elastic member 700 presses the positioning column 600 radially outward. The positioning column 600 is positioned in one of the two mating grooves 124, and the water inlet 121 is communicated with one of the two water outlets 122, thereby realizing waterway switching. Moreover, the positioning column 600 is positioned in the mating groove 124, and the spherical surface of the positioning column 600 enables better realization of sliding of the positioning column 600 into and out of the mating groove 124. Under the compression of the second elastic member 700, the positioning column 600 slides into the mating groove 124. When the spherical surface is mated with the mating groove 124, a collision sound for prompting the user is produced.

A method for using the water diverter is as follows.

The knob 800 drives the valve core 200 to rotate and the valve core 200 drives the sealing cup 400 and the positioning column 600 to rotate together, until the positioning column 600 is positioned in one of the two mating grooves 124 to produce a collision sound. At this time, the sealing cup 400 seals one of the two water outlets 122, and the indicator 810 indicates the unsealed water outlet 122 from which water flows out. The knob 800 continues to be rotated, until the positioning column 600 is positioned in the other of the two mating grooves 124 to produce a collision sound. At this time, the sealing cup 400 seals the other of the two water outlets 122, and the indicator 810 indicates the unsealed water outlet 122 from which water flows out.

### Example 2

This Example differs from Example 1 in that: three water outlet connection ports are evenly disposed on the housing in the circumferential direction, three water outlets and three mating grooves are evenly disposed on the valve body in the circumferential direction, and the three water outlets correspond to the three mating grooves one by one; and the valve core is provided with two first positioning grooves, two sealing cups and two first elastic members are installed in the two first positioning grooves in one-to-one correspondence, the two sealing cups can seal any two of the three water outlets, and water can be discharged from the unsealed water outlet.

### Example 3

This Example differs from Example 1 in that: four water outlet connection ports are evenly disposed on the housing in the circumferential direction, four water outlets and four mating grooves are evenly disposed on the valve body in the circumferential direction, and the four water outlets and the four mating grooves are in one-to-one correspondence and are axially spaced; and the valve core is provided with three first positioning grooves, three sealing cups and three first elastic members are installed in the three first positioning grooves in one-to-one correspondence, the three sealing cups can seal any three of the four water outlets, and water can be discharged from the unsealed water outlet.

To sum up, in the water diverter according to the embodiments of the present disclosure, the valve core drives at least one sealing member to rotate, the at least one sealing member can seal and block a portion of the water outlet channels, the sealed and blocked portion of the water outlet channels are disconnected from the water inlet channel and water cannot be discharged therefrom, the water inlet channel is communicated with a water outlet channel that is not sealed or blocked by the sealing member to discharge water, and waterway switching can be performed by rotating the valve core forwardly or reversely, thereby realizing 360-degree rotation in any direction, so that the water diverter has better practicability. Moreover, the housing may be manufactured by a low-cost material, and the valve body is manufactured by a material conforming to the KTW certification. In this way, the manufacturing cost of the water diverter can be reduced.

In the description of the present disclosure, it should be noted that the orientation or position relationship indicated by the terms "upper", "lower", "one side", "the other side", "one end", "the other end", "side", "opposite", "four corners", "periphery", " 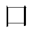 -shaped structure" and the like is based on the orientation or position relationship shown in the drawings, which is only for the convenience of describing the present disclosure and simplifying the description, rather than indicating or implying that the structure referred to has a specific orientation, or is constructed and operated in a specific orientation, and thus cannot be interpreted as a limitation on the present disclosure.

In the description of the embodiments of the present disclosure, unless otherwise explicitly specified and defined, the terms "connection", "direct connection", "indirect connection", "fixed connection", "installation" and "assembly" should be broadly interpreted. For example, they may be fixed connection, detachable connection or integrated connection. The terms "installation", "connection" and "fixed connection" may be direct connection, indirect connection through an intermediary, or internal communication between two elements. Those of ordinary skills in the art can understand the specific meanings of the above terms in the present disclosure according to specific situations.

Although the embodiments disclosed in the present disclosure are as described above, the embodiments are described only for facilitating understanding of the present disclosure, and are not intended to limit the present disclosure. A person skilled in the art to which the present disclosure pertains may make any modifications and variations in the forms and details of implementation without departing from the spirit and scope disclosed by the present disclosure. Nevertheless, the scope of patent protection of the present disclosure shall still be defined by the appended claims.

## Claims

1. A water diverter, comprising a housing (110); and further comprising:
a valve body (120) installed in the housing (110), the valve body (120) being provided with at least one water inlet channel and at least two water outlet channels, the at least two water outlet channels being evenly spaced in a circumferential direction on the valve body (120), and the water inlet channel and the water outlet channels being arranged at intervals in an axial direction on the valve body (120);
a valve core (200) rotatably installed in the valve body (120), a space enclosed by the valve core (200) and the valve body (120) forming a water passing channel (300), the at least one water inlet channel and the at least two water outlet channels both being communicated with the water passing channel (300), and the valve core (200) being provided with at least one sealing member;
the valve core (200) being rotatable between at least two limited positions corresponding to the at least two water outlet channels, and when the valve core (200) is at one of the limited positions, at least one of the water outlet channels being communicated with the water passing channel (300), and simultaneously the at least one sealing member blocking the rest of the water outlet channels.

2. The water diverter according to claim 1, wherein the valve core (200) is provided with at least one first positioning groove (210) corresponding to the at least one sealing member, the sealing member is accommodated in the corresponding first positioning groove (210), a first elastic member (500) is arranged between the sealing member and the first positioning groove (210), and the first elastic member (500) pushes the sealing member in a direction away from the first positioning groove (210).

3. The water diverter according to claim 1, wherein the housing (110) is provided with at least one water inlet connection port (111) and at least two water outlet connection ports (112), and the valve body (120) is provided with at least one water inlet (121) and at least two water outlets (122); the at least one water inlet (121) and the at least one water inlet connection port (111) are hermetically connected in one-to-one correspondence to form the at least one water inlet channel; the at least two water outlet connection ports (112) and the at least two water outlets (122) are hermetically connected in one-to-one correspondence to form the at least two water outlet channels; and materials of the valve body (120), the at least one water inlet connection port (111) and the at least two water outlet connection ports (112) are environment-friendly materials.

4. The water diverter according to claim 3, wherein an inner surface of the valve body (120) comprises a cylindrical surface section (123), the at least two water outlets (122) are located on the cylindrical surface section (123), and an end surface of the at least one sealing member facing the valve body (120) is a cylindrical curved surface (410) pressed against the cylindrical surface section (123).

5. The water diverter according to any one of claims 1-4, further comprising:
an elastically telescopic positioning member, the valve core (200) being provided with a second positioning groove (220), the positioning member being installed in the second positioning groove (220); the valve body (120) being further provided with at least two mating grooves (124) that are evenly spaced in the circumferential direction and correspond to the at least two water outlet channels one by one; and the positioning member being positionable in one of the at least two mating grooves (124).

6. The water diverter according to claim 5, wherein the positioning member comprises:
a positioning column (600) disposed in the second positioning groove (220), an end surface of the positioning column (600) facing the valve body (120) being a spherical surface; and
a second elastic member (700) disposed in the second positioning groove (220) and pressing the positioning column (600) radially outward.

7. The water diverter according to any one of claims 1-4, further comprising:
a packaging assembly blocked at one end of the housing (110) and pressing the valve body (120) into the housing (110).

8. The water diverter according to claim 7, wherein the packaging assembly comprises a fixing seat (910) and a base (920), the base (920) is fixed in the fixing seat (910), the base (920) is configured such that the fixing seat (910) blocks at one end of the housing (110) and presses the valve body (120) into the housing (110), and the material of the fixing seat (910) is an environment-friendly material.

9. The water diverter according to any one of claims 1-4, further comprising:
a knob (800) located outside the valve body (120) and installed at one end of the valve core (200) for driving the valve core (200) to rotate.

10. The water diverter according to any one of claims 1-4, wherein the valve body (120) is provided with one water inlet channel and two water outlet channels, the valve core (200) is provided with one sealing member, and when the valve core (200) is at one of the limited positions, the water passing channel (300) is communicated with one water outlet channel, and the sealing member blocks the other water outlet channel.

## Amended claims

### Amended claims in accordance with Rule 137(2) EPC.

1. A water diverter, comprising a housing (110); and further comprising:
a valve body (120) installed in the housing (110), the valve body (120) being provided with at least one water inlet channel and at least two water outlet channels, the at least two water outlet channels being evenly spaced in a circumferential direction on the valve body (120), and the water inlet channel and the water outlet channels being arranged at intervals in an axial direction on the valve body (120);
a valve core (200) rotatably installed in the valve body (120), a space enclosed by the valve core (200) and the valve body (120) forming a water passing channel (300), the at least one water inlet channel and the at least two water outlet channels both being communicated with the water passing channel (300), and the valve core (200) being provided with at least one sealing member;
the valve core (200) being rotatable between at least two limited positions corresponding to the at least two water outlet channels, and when the valve core (200) is at one of the limited positions, at least one of the water outlet channels being communicated with the water passing channel (300), and simultaneously the at least one sealing member blocking the rest of the water outlet channels;
wherein the housing (110) and the valve body (120) are two separate components, and the material of the valve body (120) is an environment-friendly material.

2. The water diverter according to claim 1, wherein the valve core (200) is provided with at least one first positioning groove (210) corresponding to the at least one sealing member, the sealing member is accommodated in the corresponding first positioning groove (210), a first elastic member (500) is arranged between the sealing member and the first positioning groove (210), and the first elastic member (500) pushes the sealing member in a direction away from the first positioning groove (210).

3. The water diverter according to claim 1, wherein the housing (110) is provided with at least one water inlet connection port (111) and at least two water outlet connection ports (112), and the valve body (120) is provided with at least one water inlet (121) and at least two water outlets (122); the at least one water inlet (121) and the at least one water inlet connection port (111) are hermetically connected in one-to-one correspondence to form the at least one water inlet channel; the at least two water outlet connection ports (112) and the at least two water outlets (122) are hermetically connected in one-to-one correspondence to form the at least two water outlet channels; and materials of the valve body (120), the at least one water inlet connection port (111) and the at least two water outlet connection ports (112) are environment-friendly materials.

4. The water diverter according to claim 3, wherein an inner surface of the valve body (120) comprises a cylindrical surface section (123), the at least two water outlets (122) are located on the cylindrical surface section (123), and an end surface of the at least one sealing member facing the valve body (120) is a cylindrical curved surface (410) pressed against the cylindrical surface section (123).

5. The water diverter according to any one of claims 1-4, further comprising:
an elastically telescopic positioning member, the valve core (200) being provided with a second positioning groove (220), the positioning member being installed in the second positioning groove (220); the valve body (120) being further provided with at least two mating grooves (124) that are evenly spaced in the circumferential direction and correspond to the at least two water outlet channels one by one; and the positioning member being positionable in one of the at least two mating grooves (124).

6. The water diverter according to claim 5, wherein the positioning member comprises:
a positioning column (600) disposed in the second positioning groove (220), an end surface of the positioning column (600) facing the valve body (120) being a spherical surface; and
a second elastic member (700) disposed in the second positioning groove (220) and pressing the positioning column (600) radially outward.

7. The water diverter according to any one of claims 1-4, further comprising:
a packaging assembly blocked at one end of the housing (110) and pressing the valve body (120) into the housing (110).

8. The water diverter according to claim 7, wherein the packaging assembly comprises a fixing seat (910) and a base (920), the base (920) is fixed in the fixing seat (910), the base (920) is configured such that the fixing seat (910) blocks at one end of the housing (110) and presses the valve body (120) into the housing (110), and the material of the fixing seat (910) is an environment-friendly material.

9. The water diverter according to any one of claims 1-4, further comprising:
a knob (800) located outside the valve body (120) and installed at one end of the valve core (200) for driving the valve core (200) to rotate.

10. The water diverter according to any one of claims 1-4, wherein the valve body (120) is provided with one water inlet channel and two water outlet channels, the valve core (200) is provided with one sealing member, and when the valve core (200) is at one of the limited positions, the water passing channel (300) is communicated with one water outlet channel, and the sealing member blocks the other water outlet channel.
